# EUROPEAN PATENT SPECIFICATION

(11) **EP 3 070 000 B1**
(45) Date of publication and mention of the grant of the patent: **27.11.2019**
(21) Application number: 16161097.7
(22) Date of filing: 18.03.2016
(51) Int. Cl.: B64D 37/32

(54) **ENGINE PROXIMATE NITROGEN GENERATION SYSTEM FOR AN AIRCRAFT**
STICKSTOFFERZEUGUNGSSYSTEM IN MOTORNÄHE FÜR EIN FLUGZEUG
SYSTÈME DE GÉNÉRATION D'AZOTE PROCHE DE MOTEUR POUR AÉRONEF

(30) Priority: 19.03.2015 US 201514663059
(43) Date of publication of application: 21.09.2016
(73) Proprietor: Hamilton Sundstrand Corporation, Charlotte, NC 28217 (US)
(72) Inventor: DANIELLO, Robert, Florence, MA Massachusetts 01062 (US)
(74) Representative: Dehns

(56) References cited:
- EP-A2- 2 620 616
- WO-A1-2011/117610
- US-A1- 2007 023 577
- US-A1- 2014 053 726

## Description

### BACKGROUND

As an aircraft consumes fuel a void is left in a fuel tank which is filled with atmospheric air. Atmospheric air typically is composed of about 78 percent nitrogen and about 21 percent oxygen with trace amounts of other gases. The mixture of atmospheric air and fuel can lead to an increased risk of combustion in the fuel tank.

Nitrogen generation systems produce nitrogen enriched air. Nitrogen enriched air has a much lower oxygen concentration than atmospheric air does. Nitrogen enriched air, typically, is composed of about 4 percent oxygen to about 12 percent oxygen with the balance being nitrogen. The nitrogen enriched air is used to fill the void in the fuel tank because the risk of combustion is substantially reduced by having nitrogen enriched air in the fuel tank as opposed to atmospheric air. US 2007/0023577191 describes a modular, on-board, inert gas generating system for an aircraft.

### SUMMARY

The invention is defined in claim 1. The invention consists in an aircraft comprising a nitrogen generation system. The nitrogen generation system includes a bleed air source. The system also includes an air separation module having an inlet for receiving bleed air, a hollow fiber membrane for substantially removing oxygen from the bleed air to produce a stream of oxygen enriched air and a stream of nitrogen enriched air, a first outlet for exhausting the nitrogen enriched air, a second outlet for exhausting the oxygen enriched air from the air separation module. The system also includes a nitrogen enriched air line configured to receive the nitrogen enriched air and a fuel tank disposed downstream from the air separation module. The air separation module is positioned within a one of the group consisting of a gas turbine engine, a nacelle, a pylon, an aircraft wing, and combinations thereof.

A nitrogen generation system according to a further embodiment includes a gas turbine engine that includes a core section and a nacelle circumscribing the core section. A space between the nacelle and the core section defines a bypass duct. The nitrogen generation system also includes an air separation module that is disposed within the nacelle. The air separation module includes an inlet for receiving bleed air from the core section, a hollow fiber membrane for separating oxygen from the bleed air to produce a stream of oxygen enriched air and a stream of nitrogen enriched air, a first outlet for exhausting the nitrogen enriched air to a nitrogen enriched air line that extends at least partially through an aircraft wing, and a second outlet for exhausting the oxygen enriched air from the air separation module.

### BRIEF DESCRIPTION OF THE DRAWINGS

FIG. 1 is a partial cross sectional view of a nitrogen generation system showing an air separation module positioned in a pylon receiving bleed air from a gas turbine engine and producing nitrogen enriched air which is transported to a fuel tank in an aircraft wing.
FIG. 2 is a schematic view of a nitrogen generation system showing the air separation module positioned in the gas turbine engine receiving bleed air from a compressor and providing nitrogen enriched air to be transported to the fuel tank.
FIG. 3 is a partial cross sectional view of an air separation module.

### DETAILED DESCRIPTION

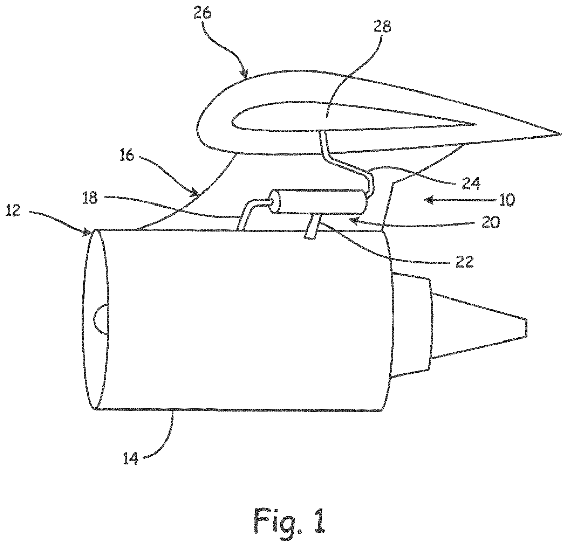

FIG. 1 is a partial cross sectional view of nitrogen generation system 10. FIG. 1 shows gas turbine engine 12, nacelle 14, pylon 16, bleed air line 18, air separation module 20, oxygen enriched air line 22, nitrogen enriched air line 24, wing 26, and fuel tank 28. Gas turbine engine 12 is contained within nacelle 14. Nacelle 14 is joined to pylon 16. Bleed air line 18 extends from gas turbine engine 12 to air separation module 20. Air separation module 20 is located in pylon 16. Oxygen enriched air line 22 and nitrogen enriched air line 24 each extend from air separation module 20. Oxygen enriched air line 22 extends to a point near gas turbine engine 12. Nitrogen enriched air line 24 extends through pylon 16 and into wing 26. Pylon 16 attaches to wing 26 which includes fuel tank 28. Nitrogen enriched air line 24 extends to fuel tank 28.

In operation, bleed air is tapped off of a compressor section of gas turbine engine 12. Bleed air flows through bleed air line 18 and into air separation module 20. Air separation module 20 substantially removes oxygen from the bleed air to create a stream of oxygen enriched air and a stream of nitrogen enriched air. As will be discussed in more detail below, air separation module 20 includes a hollow fiber membrane that is permeable to oxygen. The partial pressure of oxygen outside air separation module 20 is less than the partial pressure of oxygen inside air separation module 20. As a result, oxygen diffuses across the hollow fiber membrane and exits air separation module 20. Air separation module 20 is shown disposed within pylon 16, but in other embodiments air separation module 20 can be disposed within gas turbine engine 12, nacelle 14 or wing 26. Air separation module 20 can also be disposed between those structures. For example air separation module 20 can extend between pylon 16 and wing 26. If nitrogen generation system 10 includes a plurality of air separation modules 20, then the modules 20 can be disposed within any one of those structures or within multiple structures. Pylon 16 is shown connecting gas turbine engine 12 to wing 26 but pylon 16 can also be used to connect gas turbine engine 12 to an aircraft tail.

Oxygen enriched air is transported out of air separation module 20 by oxygen enriched air line 22. Nitrogen enriched air is transported out of air separation module 20 by nitrogen enriched air line 24. Nitrogen enriched air line 24 transports nitrogen enriched air into fuel tank 28. As fuel is consumed, nitrogen enriched air fills the void left by the consumed fuel in fuel tank 28. Nitrogen enriched air has a relatively low oxygen concentration. As a result, the risk of combustion in fuel tank 28 is lowered as compared to the void being filled with atmospheric air which has a higher oxygen concentration than nitrogen enriched air.

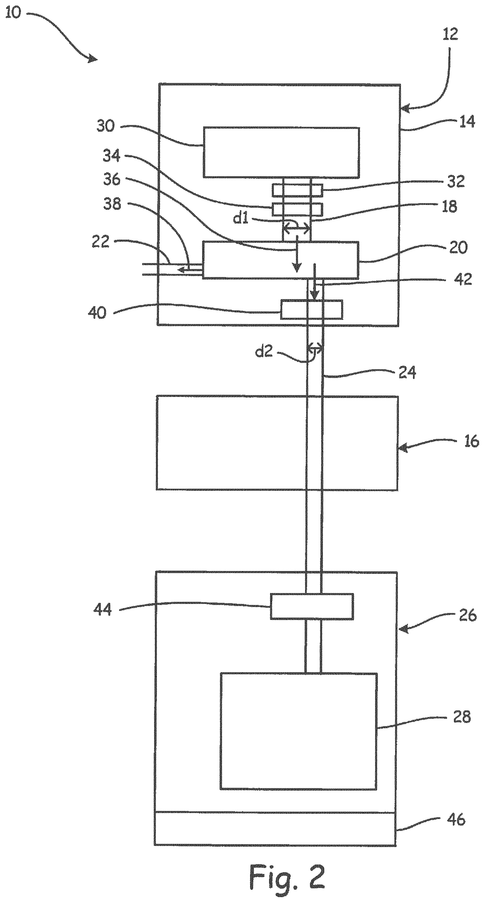

FIG. 2 is a schematic view of a nitrogen generation system 10. Nitrogen generation system 10 includes compressor 30, bleed air flow regulation valve 32, bleed air filter 34, bleed air 36, oxygen enriched air 38, nitrogen enriched air flow regulation valve 40, nitrogen enriched air 42, and nitrogen enriched air heat exchanger 44. Fuselage 46 is also shown in FIG. 2.

Compressor 30 is a component of the core section of gas turbine engine 12. Nacelle 14 circumscribes the core section and the space therebetween defines a bypass duct of gas turbine engine 12. Bleed air flow regulation valve 32 is positioned downstream from compressor 30. Bleed air filter 34 is disposed downstream from bleed air flow regulation valve 32.

Air separation module 20, as shown in FIG. 2 is disposed within a surface of nacelle 14. As stated above with respect to FIG. 1, air separation module 20 can also be disposed within pylon 16 or wing 26. If air separation module 20 is disposed within wing 26, it can be desirable to position it forward of fuel tank 28 such that fuel tank 28 is positioned between air separation module 20 and fuselage 46. For example, air separation module 20 can be disposed within wing 26 at a position proximate pylon 16. Compressor 30 and air separation module 20 are in flow communication and are joined by bleed air line 18. Bleed air line 18 has a first diameter *d*₁. Oxygen enriched air line 22 extends from air separation module 20 and transports oxygen enriched air 38 to a low pressure region about gas turbine engine 12.

Nitrogen enriched air flow regulation valve 40 is disposed within nitrogen enriched air line 24 and downstream of air separation module 20. Nitrogen enriched air flow regulation valve 40 is shown as disposed in gas turbine engine 12 but in other embodiments, valve 40 can be disposed in nacelle 14, pylon 16, or wing 26. Nitrogen enriched air line 24 joins air separation module 20 and nitrogen enriched air flow regulation valve 40 and carries nitrogen enriched air 42. As shown, nitrogen enriched air line 24 has a second diameter *d*₂ that is smaller than diameter *d*₁ of bleed air line 18.

Nitrogen enriched air line 24 extends through pylon 16 and at least partially through wing 26. Nitrogen enriched air heat exchanger 44 is disposed within wing 26 and is in flow communication with nitrogen enriched air 42. Nitrogen enriched air heat exchanger 44 can also be disposed within gas turbine engine 12, nacelle 14, or pylon 16 in other embodiments. Nitrogen enriched air line 24 extends to fuel tank 28. Fuel tank 28 is shown in wing 26 but in other embodiments, fuel tank 28 can be disposed in fuselage 46. These fuel tanks are sometimes referred to as a center body fuel tank. To reach center body fuel tank 28, nitrogen enriched air line 24 can extend through wing 26 and into fuselage 46; air separation module 20, however, will not be disposed within fuselage 46.

In operation, bleed air 36 is tapped off compressor 30. If compressor 30 includes multiple sections such as a low pressure section and a high pressure section, then bleed air 36 can be tapped off either or both sections. Bleed air 36 is typically atmospheric air composed of about 78 percent nitrogen and 21 percent oxygen with other trace gases. Bleed air 36 generally has a temperature coming off compressor 30 ranging from about 100 degrees Fahrenheit (about 37 degrees Celsius) to about 450 degrees Fahrenheit (about 232 degrees Celsius). The flow rate of bleed air 36 through bleed air line 18 is controlled by flow regulation valve 32. Bleed air 36 passes through filter 34 which can help to remove contaminants such as engine oil, from bleed air 36. After passing through filter 34, bleed air 36 is transported downstream to air separation module 20 by bleed air line 18. Air separation module 20 is configured to receive bleed air 36 at a temperature as high as about 450 degrees Fahrenheit (about 232 degrees Celsius). As a result, in the embodiment shown in FIG. 2, bleed air 36 does not have to pass through a precooling heat exchanger before entering air separation module 20.

Bleed air 36 enters air separation module 20 and is separated into a flow of oxygen enriched air 38 and a flow of nitrogen enriched air 42. Oxygen enriched air 38 is substantially composed of oxygen. Nitrogen enriched air 42 is composed of about 2 percent oxygen to about 12 percent oxygen with the balance being substantially nitrogen. Nitrogen enriched air 42 can also have an oxygen concentration lower than 2 percent. Oxygen enriched air 38 exits air separation module 20 through oxygen enriched air line 22. Oxygen enriched air line 22 discharges oxygen enriched air 38 at a low pressure region of gas turbine engine 12. For example, the low pressure region can be proximate to an intake on gas turbine engine 12. Oxygen enriched air line 22 can also be configured to dump oxygen enriched air 38 overboard at any other location.

Nitrogen enriched air 42 exits air separation module 20 through nitrogen enriched air line 24. As stated above, air separation module 20 separates bleed air 36 into oxygen enriched air 38 and nitrogen enriched air 42. Thus, nitrogen enriched air 42 represents only a portion of bleed air 36 that is transported by bleed air line 18. Therefore, to transport nitrogen enriched air 42, nitrogen enriched air line 24 can have a diameter *d*₂ that is smaller than the diameter *d*₁ of bleed air line 18 as shown in FIG. 2.

Nitrogen enriched air 42 flows through flow regulation valve 40. Flow regulation valve 40 controls the flow of nitrogen enriched air 42 through nitrogen generation system 10. Flow regulation valve 40 can be fully open or can be closed to varying degrees. When flow regulation valve 40 is in a fully open position, nitrogen enriched air 42 flows freely through nitrogen generation system 10. As nitrogen enriched air flow regulation valve 40 is closed, the flow of nitrogen enriched air 42 through nitrogen generation system 10 is decreased and a back pressure of nitrogen enriched air 42 is imposed on air separation module 20. As will be discussed in more detail below, creating a back pressure of nitrogen enriched air 42 can help to increase the rate of diffusion of oxygen across the hollow fiber membrane.

Nitrogen enriched air 42 continues to flow through nitrogen enriched air line 24. Nitrogen enriched air line 24 flows through pylon 16 and into wing 26. Heat exchanger 44 decreases the temperature of nitrogen enriched air 42 before entering fuel tank 28. This may be necessary if the temperature of nitrogen enriched air 42 would increase the risk of combustion in fuel tank 28. For example, if the void in fuel tank 28 has not been filled with nitrogen enriched air 42 but is filled with atmospheric air then it could be dangerous to introduce hot nitrogen enriched air 42 into fuel tank 28. After nitrogen enriched air 42 passes through heat exchanger 44 it enters fuel tank 28. In other embodiments of nitrogen generation system 10, nitrogen enriched air heat exchanger 44 is omitted. As stated above, nitrogen enriched air 42 fills the void in fuel tank 28 created by the consumption of fuel. Because the oxygen concentration of nitrogen enriched air 42 is quite low the risk of combustion in fuel tank 28 also is low.

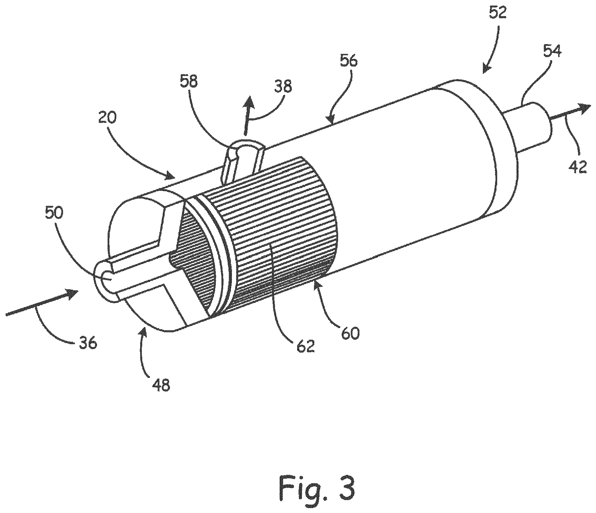

FIG. 3 is a partial cross sectional view of air separation module 20. Air separation module 20 includes first end plate 48, bleed air inlet 50, second end plate 52, nitrogen enriched air outlet 54, side wall 56, oxygen enriched air outlet 58, compartment 60, and hollow fiber membrane 62. First end plate 48 defines one end of air separation module 20. First end plate 48 is circular and includes bleed air inlet 50. Bleed air inlet 50 is joined to bleed air line 18. Second end plate 52 forms the opposite end of air separation module 20. Second end plate 52 is circular and includes nitrogen enriched air outlet 54. Nitrogen enriched is joined to nitrogen enriched air line 24. Side wall 56 extends between first end plate 48 and second end plate 52. Side wall 56 is cylindrical and includes oxygen enriched air outlet 58. Oxygen enriched air outlet 58 is joined to oxygen enriched air line 22.

Together, first end plate 48, second end plate 52, and side wall 56 define compartment 60. Hollow fiber membrane 62 is disposed within compartment 60. Hollow fiber membrane 62 is composed of a plurality of hollow fibers. Each of the hollow fibers can be made from a material permeable to oxygen such as polysulfones or polyamides.

In operation, bleed air 36 is fed into bleed air inlet 50. Bleed air 36 then enters hollow fiber membrane 62. As bleed air 36 interacts with hollow fiber membrane 62 the oxygen content in bleed air 36 decreases. Oxygen that permeates through hollow fiber membrane 62 exits oxygen enriched air outlet 58 as oxygen enriched air 38. Bleed air 36 that does not permeate through hollow fiber membrane 62 has a significantly lower oxygen concentration and exits nitrogen enriched air outlet 54 as nitrogen enriched air 42. As discussed above, nitrogen enriched air 42 has an oxygen concentration ranging from about 2 percent oxygen to about 12 percent oxygen. The oxygen concentration in nitrogen enriched air 42 is function of several parameters.

Those parameters controlling the oxygen concentration in nitrogen enriched air 42 include the pressure of bleed air 36 inside air separation module 20, the flow rate of bleed air 36, the temperature of bleed air 36, and the pressure at oxygen enriched air outlet 58. In controlling the oxygen concentration in nitrogen enriched air 42, these parameters ultimately define the pressure differential between the inside of air separation module 20 and oxygen enriched air outlet 58. A suitable pressure differential can result from an internal pressure at air separation module 20 of about 30 pounds per square inch absolute (psia) (about 206 kilopascals (kPa)) and a pressure at oxygen enriched air outlet 58 of about 2 psia (about 14 kPa). If the partial pressure of oxygen inside air separation module 20 is greater than the partial pressure of oxygen at oxygen enriched air outlet 58, then oxygen will diffuse more readily across hollow fiber membrane 62.

The partial pressure of oxygen inside air separation module 20 can be increased by increasing the flow rate of bleed air 36. If bleed air 36 enters air separation module 20 faster than it can exit, then the partial pressure of oxygen inside air separation module 20 will increase. The pressure inside air separation module 20 can also be increased by restricting the flow of nitrogen enriched air 42 through nitrogen enriched air outlet 54. The flow can be restricted by closing flow regulation valve 40. Restricting the flow of nitrogen enriched air 42 causes the pressure to rise at nitrogen enriched air outlet 54. This results in an increase in the overall pressure inside air separation module 20.

The temperature of bleed air 36 also has an effect on the partial pressure of oxygen inside air separation module 20. The permeability of hollow fiber membrane 62 is typically greater at higher temperatures. Additionally, for a gas contained in a space, pressure is directly proportional to the temperature of the gas. Therefore the higher the temperature of bleed air 36 at bleed air inlet 50 the higher the partial pressure of oxygen inside air separation module 20. Although the partial pressure of oxygen inside air separation module 20 is greater at higher temperatures of bleed air 36, the temperature of bleed air 36, in some instances, will have to be reduced. For example, if hollow fiber membrane 62 is formed from a material that cannot withstand high temperatures, then the temperature of bleed air 36 will have to be reduced.

The partial pressure of oxygen at oxygen enriched air outlet 58 should be lower than the partial pressure of oxygen inside air separation module 20. This will enhance the diffusion of oxygen across hollow fiber membrane 62. Oxygen enriched air outlet 58 can be oriented to simply discharge oxygen enriched air 38 overboard (e.g., outside nacelle 14, pylon 16, or wing 26). Oxygen enriched air outlet 58 can also be oriented to discharge oxygen enriched air 38 to a specific low pressure region about gas turbine engine 12. For example, oxygen enriched air outlet 58 can discharge oxygen enriched air 38 proximate to an inlet on gas turbine engine 12. If oxygen enriched air outlet 58 is not directly positioned proximate to the inlet, then oxygen enriched air line 22 can transport oxygen enriched air 38 to the inlet.

As another example, oxygen enriched air outlet 58 can be oriented to discharge oxygen enriched air 38 proximate to a venturi throat such as those found on a venturi scrubber. In a venturi scrubber a narrow throat section is built into a duct that forces a gas stream passing through the duct to accelerate as the duct narrows to the throat section. Oxygen enriched air outlet 58, or oxygen enriched air line 22, can discharge oxygen enriched air 38 just above the throat region where the pressure is lowest. Oxygen enriched air 38 then joins the stream of air passing through the venturi scrubber. In either of the above examples the effect of orienting oxygen enriched air outlet 58 to discharge oxygen enriched air 38 to a low pressure region results in a greater pressure differential across hollow fiber membrane 62.

As a whole, controlling these input parameters determines the oxygen concentration in nitrogen enriched air 42. As stated above, nitrogen enriched air 42 can have an oxygen concentration ranging from about 2 percent to about 12 percent. Generally, if nitrogen enriched air 42 has an oxygen concentration exceeding 12 percent there can be a risk of combustion in fuel tank 28. At cruising altitude the exact oxygen concentration of nitrogen enriched air 42 generally needs to be maintained anywhere between 4 percent to 12 percent. As the aircraft descends, however, the atmospheric pressure outside fuel tank 28 increases. As a result, atmospheric air can enter vents on fuel tank 28. To counter this, nitrogen enriched air 42 with a low oxygen concentration (e.g., 4 percent) can be generated and transported to fuel tank 28. That way the net amount of oxygen in fuel tank 28 resulting from the combination of oxygen from atmospheric air that is not displaced by nitrogen enriched air 42 oxygen enriched air 38 and oxygen in nitrogen enriched air 42 will not increase the risk of combustion in fuel tank 28.

Although at cruising altitude the concentration of oxygen in nitrogen enriched air 42 can be at the higher end of the range (e.g., 12 percent) it can be desirable at cruising altitude to still produce nitrogen enriched air 42 having an oxygen concentration at the low end of the range (e.g., 4 percent) to carry the benefit forward upon descent as atmospheric air diffuses into fuel tank 28. It can also be desirable to keep nitrogen enriched air 42 having an oxygen concentration at the low end of the range in fuel tank 28 in case of an unexpected or emergency descent.

A method of generating nitrogen enriched air 42 includes the step of generating bleed air from a bleed air source such as compressor 30. The method further includes directing bleed air 36 to air separation module 20 located on gas turbine engine 12, wing 26, or any location therebetween to generate oxygen enriched air 38 and nitrogen enriched air 42. The method further includes the step of discharging oxygen enriched air 38 about a low pressure region about gas turbine engine 12. The method further includes directing nitrogen enriched air 42 from air separation module 20 to fuel tank 28.

There are many reasons to use nitrogen generation system 10 including the following non-limiting reasons. For example, by disposing air separation module 20 outside of fuselage 46, the overall configuration of nitrogen generation system 10 can be simplified compared to existing nitrogen generation systems. Existing nitrogen generation systems dispose an air separation module within fuselage 46 of the aircraft. If air separation module 20 is disposed within fuselage 46, then bleed air 36 must be transported from gas turbine engine 12 through wing 26, past fuel tank 28, and into fuselage 46. Nitrogen enriched air 42 is then transported from fuselage 46 to fuel tank 28 located in wing 26. If air separation module 20 is disposed outside of fuselage 46, however, bleed air 36 does not have to be transported through wing 26 and fuselage 46 before entering air separation module 20.

Disposing air separation module 20 outside of fuselage 46 can also simplify the configuration of nitrogen generation system 10 by eliminating the need for a bleed air precooling heat exchanger. Nitrogen generation systems commonly use a heat exchanger to cool bleed air 36 before it is transported through wing 26. This is because transporting bleed air 36 through wing 26 involves bleed air 36 passing near fuel tank 28. If, however, bleed air 36 enters air separation module 20 before passing near fuel tank 28 the need to cool bleed air 36 can be eliminated.

Disposing air separation module 20 outside of fuselage 46 can also reduce the weight of nitrogen generation system 10. As stated above, in typical nitrogen generating systems bleed air 36 must be transported through wing 26 to air separation module 20 in fuselage 46. That means bleed air line 18 must extend through wing 26 to air separation module 20. As stated above, bleed air line 18 has a larger diameter than nitrogen enriched air line 24. Bleed air line 18 is thus heavier than nitrogen enriched air line 24. By disposing air separation system 20 outside of fuselage 46, however, bleed air line 18 is not required to span the length of wing 26. Bleed air line 18 only needs to span between compressor 30 and air separation module 20. Therefore, there can be a weight saving benefit in disposing air separation module 20 outside of fuselage 46 because the required length of the heavier bleed air line 18 is reduced.

Weight can also be saved by not including a precooling heat exchanger because, as stated above, bleed air 36 does not have to be cooled before entering air separation module 20. If a precooling heat exchanger is needed, it might not need to cool bleed air 36 to the same extent as would be required to transport bleed air 36 past fuel tank 28. As a result, the precooling heat exchanger can be smaller which can result in a weight savings. Similarly, if nitrogen generation system 10 includes heat exchanger 44, then heat exchanger 44 can be smaller than a heat exchanger used to cool bleed air 36. This is because nitrogen enriched air 42 occupies less volume than bleed air 36 and, therefore is easier to cool. Thus, heat exchanger 44 does not need to be very big.

The efficiency of air separation module 20 can also be increased by disposing it in a location other than fuselage 46. As stated above, the concentration of oxygen in nitrogen enriched air 42 depends on several parameters. Amongst others, those parameters include the temperature of bleed air 36 and the pressure differential across hollow fiber membrane 62. Because bleed air 36 does not have to be cooled before passing by fuel tank 28, the temperature of bleed air 36 inside air separation module 20 can be higher than in other nitrogen generation systems. Nitrogen generation system 10 can, therefore, take better advantage of air separation modules 20 that are capable of operating at high temperatures.

As stated above, the pressure at oxygen enriched air outlet 58 can be decreased by orienting outlet 58 to discharge oxygen enriched air 38 about a low pressure region about gas turbine engine 12. If air separation module 20 is positioned within gas turbine engine 12 this can be readily accomplished. Similarly, if air separation module 20 is positioned in pylon 16 or wing 26, then oxygen enriched air line 22 can extend to a low pressure region about gas turbine engine 12 and discharge oxygen enriched air 38 at that location.

If air separation module 20 is located in fuselage 46, then the efficiency of air separation module 20 cannot be increased as discussed above. This is true for at least two reasons. First, because of the distance air separation module 20 is placed from gas turbine engine 12, it is not possible to orient oxygen enriched air outlet 58 to discharge oxygen enriched air 38 about a low pressure region about gas turbine engine 12. Second, extending oxygen enriched air line 22 from fuselage 46 through wing 26 to gas turbine engine 12 can increase the pressure at oxygen enriched air outlet 58. This is because confining oxygen enriched air 38 within oxygen enriched air line 22 will increase the pressure of oxygen enriched air 38. Over a short distance, the pressure that is built up is nominal. Over a longer distance, however, the pressure build up is greater. Thus, the pressure at oxygen enriched air outlet 58 will also be greater which will reduce the pressure drop across hollow fiber membrane 62 and decrease the efficiency of air separation module 20.

Another reason to use nitrogen generation system 10 is that disposing air separation module 20 within gas turbine engine 12, pylon 16, or wing 26 can allow a portion of nitrogen enriched air 42 to be used for purposes other than fuel tank inerting. If, for example, air separation module 20 is located on gas turbine engine 12, then a portion of nitrogen enriched air 42 can be used to cool components of gas turbine engine 12. For example, nitrogen enriched air 42 can be used to cool vanes and blades in a turbine section of gas turbine engine 12. These components are exposed to hot combustion gas and are thus susceptible to oxidation damage. If, however, nitrogen enriched air 42 is used to cool these components the likelihood of oxidation damage is reduced because of the low concentration of oxygen in nitrogen enriched air 42.

### Discussion of Possible Embodiments

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the scope thereof as defined by the claims.

Therefore, it is intended that the invention not be limited to the particular embodiment(s) disclosed, but that the invention will include all embodiments falling within the scope of the appended claims.

## Claims

1. An aircraft comprising a gas turbine engine (12), a nacelle (14), a pylon (16), an aircraft wing (26), and a nitrogen generation system (10), the nitrogen generation system (10) comprising:
a bleed air source; and
an air separation module (20) comprising:
an inlet (50) for receiving bleed air;
a hollow fiber membrane (62) for substantially removing oxygen from the bleed air to produce a stream of oxygen enriched air and a stream of nitrogen enriched air;
a first outlet (54) for exhausting the nitrogen enriched air; and
a second outlet (58) for exhausting the oxygen enriched air from the air separation module (20);
a nitrogen enriched air line (24) configured to receive the nitrogen enriched air exhausted from the first outlet; and
a fuel tank (28) that is disposed downstream from the air separation module (20) and configured to receive the nitrogen enriched air from the nitrogen enriched air line (24);
wherein the air separation module (20) is positioned within one of the group consisting of: said gas turbine engine, said nacelle, said pylon, said aircraft wing, and combinations thereof.

2. The aircraft of claim 1, wherein the nitrogen generation system does not include a bleed air precooling heat exchanger disposed downstream from the bleed air source and upstream of the air separation module (20).

3. The aircraft of claim 1 or 2, and the nitrogen generation system further comprising:
a flow regulation valve (40) in flow communication with the nitrogen enriched air is disposed downstream from the air separation module (20).

4. The aircraft of any preceding claim, wherein the fuel tank (28) is located within the aircraft wing.

5. The aircraft of any preceding claim, wherein the air separation module (20) is located on the aircraft wing at a location proximate to the pylon.

6. The aircraft of any preceding claim, wherein the oxygen enriched air outlet (58) exhausts the oxygen enriched air to a low pressure region on the gas turbine engine.

7. The aircraft of any preceding claim, wherein the bleed air source is configured to generate bleed air ranging in temperature from about 100 degrees Fahrenheit (about 37 degrees Celsius) to about 450 degrees Fahrenheit (about 232 degrees Celsius) and the inlet (56) of the air separation module (20) is configured to receive bleed air having a temperature as high as about 450 degrees Fahrenheit (232 degrees Celsius).

8. The aircraft of any preceding claim, wherein the air separation module (20) is configured to produce nitrogen enriched air having a concentration of about four percent oxygen to about twelve percent oxygen.

9. The aircraft of any preceding claim, wherein the system further comprises:
a heat exchanger in flow communication with the nitrogen enriched air and disposed downstream from the air separation module (20).

10. The aircraft of claim 1, wherein:
said gas turbine engine (12) further comprises:
a core section.

11. The aircraft
of claim 1 or 2, wherein the fuel tank (28) is located in an aircraft fuselage (46).

12. The aircraft of claim 10, wherein the core is configured to generate bleed air ranging in temperature from about 37 degrees Celsius (about 100 degrees Fahrenheit) to about 232 degrees Celsius (about 450 degrees Fahrenheit) and the inlet of the air separation module is configured to receive bleed air having a temperature as high as about 232 degrees Celsius (450 degrees Fahrenheit).

## Patentansprüche

1. Flugzeug, umfassend einen Gasturbinenmotor (12), eine Gondel (14), einen Pylonen (16), einen Flugzeugflügel (26) und ein Stickstofferzeugungssystem (10), wobei das Stickstofferzeugungssystem (10) Folgendes umfasst:
eine Zapfluftquelle; und
ein Lufttrennungsmodul (20), umfassend:
einen Einlass (50) zum Aufnehmen von Zapfluft;
eine Hohlfasermembran (62), um im Wesentlichen Sauerstoff aus der Zapfluft zu entfernen, um einen Strom von mit Sauerstoff angereicherter Luft und einen Strom von mit Stickstoff angereicherter Luft zu erzeugen;
einen ersten Auslass (54) zum Ablassen der mit Stickstoff angereicherten Luft; und
einen zweiten Auslass (58) zum Ablassen der mit Sauerstoff angereicherten Luft aus dem Lufttrennungsmodul (20) ;
eine mit Stickstoff angereicherte Luftleitung (24), die konfiguriert ist, um die mit Stickstoff angereicherte Luft aufzunehmen, die aus dem ersten Auslass abgelassen wird; und
einen Treibstofftank (28), der stromabwärts von dem Lufttrennungsmodul (20) angeordnet und konfiguriert ist, um die mit Stickstoff angereicherte Luft aus der mit Stickstoff angereicherten Luftleitung (24) aufzunehmen;
wobei das Lufttrennungsmodul (20) innerhalb eines von der Gruppe positioniert ist, die aus Folgendem besteht: dem Gasturbinenmotor, der Gondel, dem Pylonen, dem Flugzeugflügel und Kombinationen davon.

2. Flugzeug nach Anspruch 1, wobei das Stickstofferzeugungssystem keinen Zapfluft vorkühlenden Wärmetauscher einschließt, der stromabwärts von der Zapfluftquelle und stromaufwärts von dem Lufttrennungsmodul (20) angeordnet ist.

3. Flugzeug nach Anspruch 1 oder 2, und das Stickstofferzeugungssystem, ferner umfassend:
ein Durchflussregelventil (40) in Flusskommunikation mit der mit Stickstoff angereicherten Luft ist stromabwärts von dem Lufttrennungsmodul (20) angeordnet.

4. Flugzeug nach einem der vorhergehenden Ansprüche, wobei sich der Treibstofftank (28) innerhalb des Flugzeugflügels befindet.

5. Flugzeug nach einem der vorhergehenden Ansprüche, wobei sich das Lufttrennungsmodul (20) an dem Flugzeugflügel an einer Stelle in der Nähe des Pylonen befindet.

6. Flugzeug nach einem der vorhergehenden Ansprüche, wobei der Auslass (58) von mit Sauerstoff angereicherter Luft die mit Sauerstoff angereicherte Luft zu einem Niederdruckbereich an dem Gasturbinenmotor ablässt.

7. Flugzeug nach einem der vorhergehenden Ansprüche, wobei die Zapfluftquelle konfiguriert ist, um Zapfluft zu erzeugen, die hinsichtlich der Temperatur von ungefähr 100 Grad Fahrenheit (ungefähr 37 Grad Celsius) bis ungefähr 450 Grad Fahrenheit (ungefähr 232 Grad Celsius) reicht und der Einlass (56) des Lufttrennungsmoduls (20) konfiguriert ist, um Zapfluft aufzunehmen, die eine Temperatur aufweist, die so hoch ist wie ungefähr 450 Grad Fahrenheit (232 Grad Celsius).

8. Flugzeug nach einem der vorhergehenden Ansprüche, wobei das Lufttrennungsmodul (20) konfiguriert ist, um mit Stickstoff angereicherte Luft zu erzeugen, die eine Konzentration von ungefähr vier Prozent Sauerstoff bis ungefähr zwölf Prozent Sauerstoff aufweist.

9. Flugzeug nach einem der vorhergehenden Ansprüche, wobei das System ferner Folgendes umfasst:
einen Wärmetauscher in Flusskommunikation mit der mit Stickstoff angereicherten Luft und stromabwärts von dem Lufttrennungsmodul (20) angeordnet.

10. Flugzeug nach Anspruch 1, wobei:
der Gasturbinenmotor (12) ferner Folgendes umfasst:
einen Kernabschnitt.

11. Flugzeug nach Anspruch 1 oder 2, wobei sich der Treibstofftank (28) in einem Flugzeugrumpf (46) befindet.

12. Flugzeug nach Anspruch 10, wobei der Kern konfiguriert ist, um Zapfluft zu erzeugen, die hinsichtlich der Temperatur von ungefähr 37 Grad Celsius (ungefähr 100 Grad Fahrenheit) bis ungefähr 232 Grad Celsius (ungefähr 450 Grad Fahrenheit) reicht und der Einlass des Lufttrennungsmoduls konfiguriert ist, um Zapfluft aufzunehmen, die eine Temperatur aufweist, die so hoch ist wie ungefähr 232 Grad Celsius (450 Grad Fahrenheit).

## Revendications

1. Aéronef comprenant un moteur à turbine à gaz (12), une nacelle (14), un pylône (16), une aile d'aéronef (26) et un système de génération d'azote (10), le système de génération d'azote (10) comprenant :
une source d'air de prélèvement ; et
un module de séparation d'air (20) comprenant :
une entrée (50) pour recevoir l'air de prélèvement ;
une membrane à fibre creuse (62) pour éliminer sensiblement l'oxygène de l'air de prélèvement afin de produire un courant d'air enrichi en oxygène et un courant d'air enrichi en azote ;
une première sortie (54) pour évacuer l'air enrichi en azote ; et
une seconde sortie (58) pour évacuer l'air enrichi en oxygène du module de séparation d'air (20) ;
une conduite d'air enrichi en azote (24) configurée pour recevoir l'air enrichi en azote qui s'échappe de la première sortie ; et
un réservoir à carburant (28) qui est disposé en aval du module de séparation d'air (20) et est configuré pour recevoir l'air enrichi en azote provenant de la conduite d'air enrichi en azote (24) ;
dans lequel le module de séparation d'air (20) est positionné dans un élément parmi le groupe constitué : dudit moteur à turbine à gaz, de ladite nacelle, dudit pylône, de ladite aile d'aéronef et de leurs combinaisons.

2. Aéronef selon la revendication 1, dans lequel le système de génération d'azote ne comprend pas d'échangeur thermique de pré-refroidissement d'air de prélèvement disposé en aval de la source d'air de prélèvement et en amont du module de séparation d'air (20).

3. Aéronef selon la revendication 1 ou 2, et le système de génération d'azote comprenant en outre :
une vanne de régulation de débit (40) en communication fluidique avec l'air enrichi en azote est disposée en aval du module de séparation d'air (20).

4. Aéronef selon une quelconque revendication précédente, dans lequel le réservoir à carburant (28) est situé dans l'aile d'aéronef.

5. Aéronef selon une quelconque revendication précédente, dans lequel le module de séparation d'air (20) est situé sur l'aile d'aéronef à un emplacement proche du pylône.

6. Aéronef selon une quelconque revendication précédente, dans lequel l'air enrichi en oxygène (58) s'échappe de la sortie d'air enrichi en oxygène dans une région à basse pression sur le moteur à turbine à gaz.

7. Aéronef selon une quelconque revendication précédente, dans lequel la source d'air de prélèvement est configurée pour générer de l'air de prélèvement dont la température varie d'environ 37 degrés Celsius (environ 100 degrés Fahrenheit) à environ 232 degrés Celsius (450 degrés Fahrenheit), et l'entrée (56) du module de séparation d'air (20) est configuré pour recevoir de l'air de prélèvement ayant une température pouvant atteindre environ 232 degrés Celsius (450 degrés Fahrenheit).

8. Aéronef selon une quelconque revendication précédente, dans lequel le module de séparation d'air (20) est configuré pour produire de l'air enrichi en azote ayant une concentration d'environ quatre pour cent d'oxygène à environ douze pour cent d'oxygène.

9. Aéronef selon une quelconque revendication précédente, dans lequel le système comprend en outre :
un échangeur thermique en communication fluidique avec l'air enrichi en azote et disposé en aval du module de séparation d'air (20).

10. Aéronef selon la revendication 1, dans lequel :
ledit moteur à turbine à gaz (12) comprend en outre :
une section de noyau.

11. Aéronef selon la revendication 1 ou 2, dans lequel le réservoir à carburant (28) est situé dans un fuselage d'aéronef (46) .

12. Aéronef selon la revendication 10, dans lequel le noyau est configuré pour générer de l'air de prélèvement dont la température varie d'environ 37 degrés Celsius (environ 100 degrés Fahrenheit) à environ 232 degrés Celsius (450 degrés Fahrenheit), et l'entrée du module de séparation d'air est configurée pour recevoir de l'air de prélèvement ayant une température pouvant atteindre environ 320 degrés Celsius (450 degrés Fahrenheit).
